(19) Europäisches Patentamt / European Patent Office / Office européen des brevets

(11) **EP 4 393 972 A1**

(12) **EUROPEAN PATENT APPLICATION**
published in accordance with Art. 153(4) EPC

(43) Date of publication:
**03.07.2024 Bulletin 2024/27**

(21) Application number: **22861195.0**

(22) Date of filing: **17.08.2022**

(51) International Patent Classification (IPC):
*C08G 2/18* (2006.01)    *C08F 4/00* (2006.01)
*C08F 4/14* (2006.01)

(52) Cooperative Patent Classification (CPC):
**C08F 4/00; C08F 4/14; C08G 2/18**

(86) International application number:
**PCT/JP2022/031004**

(87) International publication number:
**WO 2023/026907 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **24.08.2021  JP 2021136338**

(71) Applicant: **MITSUBISHI GAS CHEMICAL
COMPANY, INC.**
**Chiyoda-ku**
**Tokyo 100-8324 (JP)**

(72) Inventor: **NAKASHIMA, Mika**
**Tokyo 100-8324 (JP)**

(74) Representative: **Müller-Boré & Partner
Patentanwälte PartG mbB
Friedenheimer Brücke 21
80639 München (DE)**

(54) **METHOD FOR PRODUCING OXYMETHYLENE COPOLYMER AND METHOD FOR PRODUCING MOLDED ARTICLE**

(57)    Provided is a method for producing an oxymethylene copolymer having increased physical properties.

Disclosed is a method for producing an oxymethylene copolymer, including copolymerizing trioxane and a comonomer copolymerizable with the trioxane in a presence of a cationic polymerization catalyst and a polymerization controlling agent, wherein the polymerization controlling agent is a cyclic ether with a 4- or more-membered ring containing one oxygen atom.

EP 4 393 972 A1

**Description**

Technical Field

The present invention relates to a method for producing an oxymethylene copolymer and a method for producing a molded article.

Background Art

Conventionally, oxymethylene copolymers (polyacetal copolymers) excel in, for instance, strength, elastic modulus, impact resistance, and slidability, and are thus widely used as, for example, fibers, films, gears, or bearings for electronic devices, vehicles, and others.

In recent years, oxymethylene copolymer-use applications have increasingly required high performance and high functionality. This necessitates increased physical properties of a raw material oxymethylene copolymer.

For example, Patent Literature 1 describes an invention of a method for producing a polyacetal copolymer by polymerizing trioxane and a cyclic ether and/or a cyclic formal in the presence of a polymerization catalyst. At this time, the polymerization catalyst is characterized by a metal halide having a metal element of from the 3rd period to the 6th period and from the 3rd group to the 16th group of the periodic table.

Patent Literature 1 describes that when boron trifluoride or a coordination compound thereof is used as a polymerization catalyst, a tar-like precipitate derived from the polymerization catalyst is generated and the feed amount of the polymerization catalyst is uneven, resulting in local precipitation of the polymer. In addition, the polymerization catalyst used may be perfluoromethanesulfonic acid or a derivative thereof, a heteropoly acid, an isopoly acid, or an acidic salt thereof. In this case, the polymer precipitates due to rapid polymerization in a portion of the reactor because of high catalytic activity and fast polymerization rate. This applies a load to parts of the reactor and vibrates the reactor. These harmful effects during production are reported.

On the other hand, the invention described in Patent Literature 1 discloses that use of a specific polymerization catalyst enables a highly heat-stable polyacetal copolymer to be produced while stably operating or using a polymerization reactor.

Citation List

Patent Literature

Patent Literature 1: JP 2018-154797 A

Summary of Invention

Technical Problem

The invention described in Patent Literature 1 can provide a highly heat-stable oxymethylene copolymer. Unfortunately, even in the production method described in Patent Literature 1, the obtained oxymethylene copolymer does not necessarily satisfy the required physical properties.

Here, the present invention provides a method for producing an oxymethylene copolymer with increased physical properties.

Solution to Problem

The present invention is, for example, as follows.

[1] A method for producing an oxymethylene copolymer, including copolymerizing trioxane and a comonomer copolymerizable with the trioxane in a presence of a cationic polymerization catalyst and a polymerization controlling agent,

wherein the polymerization controlling agent is a cyclic ether with a 4- or more-membered ring containing one oxygen atom.

[2] The production method according to [1], wherein an amount of the polymerization controlling agent added is 250 $\mu$g or less based on 1 g of trioxane.

[3] The production method according to [1] or [2], wherein an amount of the polymerization controlling agent added is 7.1 µg or larger based on 1 g of trioxane.

[4] The production method according to any one of [1] to [3], wherein the cyclic ether contains at least one of a cyclic ether with a 5-membered ring containing one oxygen atom and a cyclic ether with a 6-membered ring containing one oxygen atom.

[5] The production method according to any one of [1] to [4], wherein the cyclic ether includes at least one selected from the group consisting of tetrahydrofuran (THF), 4-methyltetrahydropyran (MTHP), and 2-methyltetrahydrofuran (MHF).

[6] The production method according to any one of [1] to [5], including adding a first solution containing the polymerization controlling agent and the cationic polymerization catalyst to a second solution containing the trioxane and the comonomer copolymerizable with the trioxane.

[7] The production method according to any one of [1] to [6], wherein the cationic polymerization catalyst is a Lewis acid and/or a protonic acid.

[8] The production method according to any one of [1] to [7], wherein the cationic polymerization catalyst includes at least one selected from the group consisting of boron trifluoride and coordination compounds thereof, aryl boron fluoride compounds and coordination compounds thereof, and perchloric acid and derivatives thereof.

[9] The production method according to any one of [1] to [8], wherein an amount of the comonomer added is from 0.1 to 6.5 parts by mass based on 100 parts by mass of the trioxane.

[10] A method for producing a molded article, including molding an oxymethylene copolymer produced by the method according to any one of [1] to [9].

Advantageous Effects of Invention

The present invention provides a method for producing an oxymethylene copolymer with increased physical properties.

Description of Embodiments

Hereinafter, embodiments of the present invention will be described in detail.

<Method for producing oxymethylene copolymer>

A method for producing an oxymethylene copolymer according to the present invention includes copolymerizing trioxane and a comonomer copolymerizable with the trioxane in the presence of a cationic polymerization catalyst and a polymerization controlling agent. At this time, the polymerization controlling agent is a cyclic ether with a 4- or more-membered ring containing one oxygen atom. Note that during the copolymerization, it is possible to further additionally use, for instance, a chain transfer agent, a solvent, an antioxidant.

The above production method can be used to produce an oxymethylene copolymer with increased physical properties. The reason for this is not necessarily clear, but is considered to be, for example, the following reason. In the method for producing an oxymethylene copolymer, first, a monomer such as trioxane is, for example, ring-opened by a cationic polymerization catalyst to generate a cationic active species. Next, the cationic active species may be continuously copolymerized to give an agglomerated oxymethylene copolymer. At this time, depending on the polymerization rate of the copolymerization reaction, agglomeration does not uniformly occur in the reaction system in some cases. For example, a faster polymerization rate results in a locally agglomerated oxymethylene copolymer in the reaction system. This may cause a variation in the rate of forming the agglomerated material in the reaction system. As a result, an insufficiently polymerized portion was generated in at least part of the resulting oxymethylene copolymer. Accordingly, the required physical properties were not met in some cases.

In the conventional method for producing an oxymethylene copolymer, the polymerization reaction is very fast in at least part of the reaction system. This caused a locally agglomerated oxymethylene copolymer and a variation of the polymerization rate in the reaction system in some cases. As a result, the resulting oxymethylene copolymer had insufficient physical properties such as crystallinity in some cases.

By contrast, the present invention enables a uniform polymerization reaction by using a specific polymerization controlling agent in combination with a cationic polymerization catalyst. Specifically, the polymerization controlling agent acts on a cationic active species caused directly or indirectly by the cationic polymerization catalyst, so that the reaction rate can be adjusted to obtain a uniform polymerization reaction. This makes it possible to prevent or suppress formation of a locally agglomerated oxymethylene copolymer in the reaction system. In addition, the polymer production efficiency is improved, and the obtained oxymethylene copolymer can have a uniform molecular weight distribution. This results in an oxymethylene copolymer with increased physical properties such as crystallinity.

[Trioxane]

Trioxane (1,3,5-trioxane) undergoes ring-opening polymerization during a polymerization reaction to give an oxymethylene unit ($[-CH_2O-]_n$) of an oxymethylene copolymer.

[Comonomer]

The comonomer is a monomer, other than trioxane, copolymerizable with the trioxane. Note that the comonomer improves the thermal stability of the oxymethylene copolymer. The comonomer is also present as an amorphous component in the oxymethylene copolymer.

Examples of the comonomer include, but are not particularly limited to, a comonomer from which an oxyethylene unit is derived (e.g., 1,3-dioxolane, 2-ethyl-1,3-dioxolane, 2-propyl-1,3-dioxolane, 2-butyl-1, 3-dioxolane, 2,2-dimethyl-1,3-dioxolane, 2-phenyl-2-methyl-1,3-dioxolane, 4-methyl-1,3-dioxolane, 2,4-dimethyl-1,3-dioxolane, 2-ethyl-4-methyl-1,3-dioxolane, 4,4-dimethyl-1,3-dioxolane, 4,5-dimethyl-1,3-dioxolane, 2,2,4-trimethyl-1,3-dioxolane, 4-hydroxymethyl-1,3-dioxolane, 4-butyloxymethyl-1,3-dioxolane, 4-phenoxymethyl-1,3-dioxolane, 4-chloromethyl-1,3-dioxolane, ethylene oxide, propylene oxide, butylene oxide, styrene oxide, epichlorohydrin, epibromohydrin, glycidyl methyl ether, ethyl glycidyl ether, butyl glycidyl ether, phenyl glycidyl ether); or a cyclic formal of a comonomer from which the oxyethylene unit is derived. These comonomers may be used singly or two or more kinds thereof may be used in combination.

Among them, from the viewpoint of excellent thermal stability and crystallinity, the comonomer preferably contains a comonomer from which an oxyethylene unit is derived, more preferably contains 1,3-dioxolane and/or ethylene oxide, and still more preferably contains 1,3-dioxolane.

The amount of comonomer added is preferably from 0.01 to 10 parts by mass, more preferably from 0.1 to 6.5 parts by mass, and still more preferably from 0.1 to 6.0 parts by mass based on 100 parts by mass of trioxane. From the viewpoint of increasing the melting point of the oxymethylene copolymer, the amount is particularly preferably from 0.1 to 5.0 parts by mass, very preferably from 0.1 to 3.0 parts by mass, and most preferably from 0.3 to 1.0 parts by mass.

In one embodiment, the amount of comonomer added per mol of trioxane is preferably from 0.001 to 1 mol, more preferably from 0.001 to 0.1 mol, still more preferably from 0.001 to 0.06 mol, particularly preferably from 0.001 to 0.04 mol, and most preferably from 0.003 to 0.01 mol.

Note that as the amount of comonomer added becomes smaller, the crystallinity of the obtained oxymethylene copolymer tends to be higher. Accordingly, in the copolymerization reaction system, an agglomerated oxymethylene copolymer is likely to be locally formed. Thus, the present invention exerts a higher effect of improving the physical properties.

[Cationic polymerization catalyst]

The cationic polymerization catalyst has, for instance, a function of promoting a copolymerization reaction by acting on trioxane and/or a comonomer to generate a cationic active species.

The cationic polymerization catalyst is preferably a Lewis acid and/or a protonic acid.

Examples of the Lewis acid include, but are not particularly limited to, an inorganic Lewis acid, an organic Lewis acid, or a coordination compound thereof.

Examples of the inorganic Lewis acid include boron trifluoride ($BF_3$), boron trichloride ($BCl_3$), aluminum chloride ($AlCl_3$), tin tetrachloride ($SnCl_4$), zinc chloride ($ZnCh$), iron chloride ($FeCl_3$), gallium chloride ($GaCl_3$), zirconium chloride ($ZrCl_4$), or niobium pentachloride ($NbCl_5$).

Examples of the organic Lewis acid include an aryl boron fluoride compound such as triphenylborane (TPB), tris(pentafluorophenyl)borane, bis(pentafluorophenyl)fluoroborane, pentafluorophenyldifluoroborane, tris(2,3,4,5-tetrafluorophenyl)boron, tris(2,3,4,6-tetrafluorophenyl)boron, tris(2,3,5,6-tetrafluorophenyl)boron, tris(2,3,5-trifluorophenyl)boron, tris(2,4,6-trifluorophenyl)boron, tris(1,3 -difluorophenyl)boron, tris(2,3,5,6-tetrafluoro-4-methylphenyl)boron, tris(2,3,4,6-tetrafluoro-5-methylphenyl)boron, tris(2,4,5-trifluoro-6-methylphenyl)boron, tris(2,3,6-trifluoro-4-methylphenyl)boron, tris(2,4,6-trifluoro-3-methylphenyl)boron, tris(2,6-difluoro-3-methylphenyl)boron, tris(2,4-difluoro-5-methylphenyl)boron, tris(3,5-difluoro-2-methylphenyl)boron, tris(4-methoxy-2,3,5,6-tetrafluorophenyl)boron, tris(3-methoxy-2,4,5,6-tetrafluorophenyl)boron, tris(2-methoxy-3,5,6-trifluorophenyl)boron, tris(3-methoxy-2,5,6-trifluorophenyl)boron, tris(3-methoxy-2,4,6-trifluorophenyl)boron, tris(2-methoxy-3,5-difluorophenyl)boron, tris(3-methoxy-2,6-difluorophenyl)boron, tris(3-methoxy-4,6-difluorophenyl)boron, tris(2-methoxy-4,6-difluorophenyl)boron, or tris(4-methoxy-2,6-difluorophenyl)boron.

Examples of the coordination compound include, but are not particularly limited to, a coordination compound of an inorganic Lewis acid, organic Lewis acid, or aryl boron fluoride compound with water (hydrate), ammonia, dimethyl ether, diethyl ether, dibutyl ether, phenol, or ethylamine.

Examples of the protonic acid include, but are not particularly limited to, perchloric acid ($HClO_4$), hydrogen

chloride (HCl), sulfuric acid (H$_2$SO$_4$), trifluoroacetic acid (CF$_3$COOH), trichloroacetic acid (CCl$_3$COOH), trifluoromethanesulfonic acid (CF$_3$SO$_3$H), p-toluenesulfonic acid, or a derivative thereof.

Examples of the derivative include, but are not particularly limited to, perchloric anhydride or peroxyacetyl perchlorate.

The above-described cationic polymerization catalysts may be used single or two or more kinds thereof may be used in combination.

Among the compounds listed above, the cationic polymerization catalyst preferably includes at least one selected from the group consisting of boron trifluoride and coordination compounds thereof, aryl boron fluoride compounds and coordination compounds thereof, and perchloric acid and derivatives thereof. It is more preferable to include at least one selected from the group consisting of boron trifluoride and coordination compounds thereof, and perchloric acid and derivatives thereof. It is still more preferable to include at least one selected from the group consisting of coordination compounds of boron trifluoride, and perchloric acid. It is particularly preferable to include a coordination compound of boron trifluoride and diethyl ether (boron trifluoride diethyl ether complex: BF$_3$·Et$_2$O).

The amount of cationic polymerization catalyst added is preferably from 0.00001 to 1 mmol, more preferably from 0.0001 to 0.1 mmol, and still more preferably from 0.0001 to 0.05 mmol based on 1 mol of trioxane.

[Polymerization controlling agent]

The polymerization controlling agent is a cyclic ether with a 4- or more-membered ring containing one oxygen atom. The polymerization controlling agent acts on the cationic active species generated during the polymerization reaction by having polarity in the molecule. This stabilizes at least part of the cationic active species and adjusts the rate of the polymerization reaction, so that a uniform polymerization reaction can be carried out.

Examples of the polymerization controlling agent include, but are not particularly limited to, a cyclic ether with a 4-membered ring containing one oxygen atom (e.g., oxetane, 2-methyloxetane, 3-methyloxetane, 2-ethyloxetane, 3-ethyloxetane, 2-propyloxetane, 2,2-dimethyloxetane, 3,3-dimethyloxetane, 2,3-dimethyloxetane, 2-ethyl-3-methyloxetane); a cyclic ether with a 5-membered ring containing one oxygen atom (e.g., tetrahydrofuran (THF), 2-methyltetrahydrofuran (MHF), 3-methyltetrahydrofuran, 2-ethyltetrahydrofuran, 3-ethyltetrahydrofuran, 2-propyltetrahydrofuran, 2,2-dimethyltetrahydrofuran, 3,3-dimethyltetrahydrofuran, 2,3-dimethyltetrahydrofuran, 2,4-dimethyltetrahydrofuran, 2-ethyl-3 methyltetrahydrofuran, 2-ethyl-4-methyltetrahydrofuran); or a cyclic ether with a 6-membered ring containing one oxygen atom (e.g., tetrahydropyran, 2-methyltetrahydropyran, 3-methyltetrahydropyran, 4-methyltetrahydropyran (MTHP), 2-ethyltetrahydropyran, 3-ethyltetrahydropyran, 4-ethyltetrahydropyran, 2-propyltetrahydropyran, 2,2-dimethyltetrahydropyran, 3,3-dimethyltetrahydropyran, 4,4-dimethyltetrahydropyran, 2,3-dimethyltetrahydropyran, 2,5-dimethyltetrahydropyran, 2-ethyl-5-methyltetrahydropyran). These polymerization controlling agents may be used singly or two or more kinds thereof may be used in combination.

Among the compounds listed above, the polymerization controlling agent preferably includes at least one of a cyclic ether with a 5-membered ring containing one oxygen atom and a cyclic ether with a 6-membered ring containing one oxygen atom. It is more preferable to include at least one selected from the group consisting of tetrahydrofuran (THF), 2-methyltetrahydrofuran (MHF), 3-methyltetrahydrofuran, 2-ethyltetrahydrofuran, 3-ethyltetrahydrofuran, tetrahydropyran, 4-methyltetrahydropyran (MTHP), and 4-ethyltetrahydropyran (MTHP). It is still more preferable to include at least one selected from the group consisting of tetrahydrofuran (THF), 4-methyltetrahydropyran (MTHP), and 2-methyltetrahydrofuran (MHF).

The amount of polymerization controlling agent added per g of trioxane is preferably 1000 μg or less, more preferably 500 μg or less, still more preferably 250 μg or less, particularly preferably 200 μg or less, and most preferably 90 μg or less.

In addition, the amount of polymerization controlling agent added per g of trioxane is preferably 1 μg or larger, more preferably 7.1 μg or larger, still more preferably 20 μg or larger, particularly preferably 30 μg or larger, and most preferably 40 μg or larger.

In one preferred embodiment, the amount of polymerization controlling agent added per g of trioxane is preferably from 1 to 1000 μg, more preferably from 1 to 500 μg, still more preferably from 7.1 to 250 μg, particularly preferably from 20 to 200 μg, and most preferably from 30 to 90 μg.

In another embodiment, the amount of polymerization controlling agent added per mol of trioxane is preferably from 0.0001 to 10 mmol, more preferably from 0.005 to 1 mmol, still more preferably from 0.01 to 0.75 mmol, particularly preferably from 0.05 to 0.25 mmol, and particularly preferably from 0.05 to 0.1 mmol.

[Chain transfer agent]

The chain transfer agent has a function of adjusting the molecular weight of oxymethylene copolymer.

Examples of the chain transfer agent include, but are not particularly limited to, a protonic compound (e.g.,

water, formic acid, methanol, formaldehyde, phenol, 2,6-dimethylphenol); or an ether compound (e.g., methylal, methoxymethylal, dibutoxymethane). These chain transfer agents may be used singly or two or more kinds thereof may be used in combination.

Among them, the chain transfer agent preferably contains an ether compound, and more preferably contains methylal since the terminal of the oxymethylene copolymer to be obtained is end-capped with a stable methoxy group ($-OCH_3$).

Note that the chain transfer agent may be derived from a process for producing trioxane, or may be separately added, but is preferably separately added. Incidentally, examples of the chain transfer agent derived from the process for producing trioxane include water, formic acid, methanol, or formaldehyde. The chain transfer agent derived from the process for producing trioxane is preferably removed before the copolymerization reaction by purifying trioxane, for example, by distillation.

The amount of the chain transfer agent added may be determined, if appropriate, according to a desired melt flow rate (MFR) of the oxymethylene copolymer. Although not particularly limited, in general, the amount based on 1 mol of trioxane is preferably 10 mmol or less and more preferably 5 mmol or less.

[Solvent]

The solvent has a function of dispersing a substrate in the copolymerization reaction.

The solvent is not particularly limited as long as the solvent is other than the polymerization controlling agent. Examples include: an aliphatic hydrocarbon (e.g., hexane, heptane, cyclohexane); an aromatic hydrocarbon (e.g., benzene, toluene, xylene); or an ether solvent (e.g., dimethyl ether, diethyl ether, dibutyl ether, 1,4-dioxane). These solvents may be used singly or two or more kinds thereof may be used in combination.

The amount of solvent added per mmol of the cationic polymerization catalyst is preferably 0.5 g or larger and more preferably 1.0 g or larger. Note that the upper limit of the amount of solvent added is not particularly limited, and is usually 50 g or less and preferably 25 g or less.

[Copolymerization]

The copolymerization is performed by reacting trioxane and a comonomer copolymerizable with the trioxane in the presence of a cationic polymerization catalyst and a polymerization controlling agent.

The order of addition of the raw materials and others used for copolymerization is not particularly limited, and can be appropriately changed.

In one embodiment, the method for producing an oxymethylene copolymer includes adding a first solution containing the polymerization controlling agent and the cationic polymerization catalyst to a second solution containing the trioxane and the comonomer copolymerizable with the trioxane. That is, the polymerization controlling agent together with the cationic polymerization catalyst is added to the second solution. Note that when a chain transfer agent is used, the chain transfer agent is usually added to the second solution. Also, when a solvent is used, the solvent is added to the first solution and/or the second solution. This embodiment can reduce production cost since the polymerization controlling agent does not have to be added separately.

In another embodiment, the method for producing an oxymethylene copolymer includes: a first step of adding a polymerization controlling agent-containing solution containing a polymerization controlling agent to a second solution containing trioxane and a comonomer copolymerizable with the trioxane; and a second step of adding a polymerization catalyst-containing solution containing a cationic polymerization catalyst to the mixed solution obtained in the first step. That is, the polymerization controlling agent is added to the second solution before the cationic polymerization catalyst is added. Note that when a chain transfer agent is used, the chain transfer agent is usually added to the second solution. When a solvent is used, the solvent is added to at least one of the second solution, the polymerization control agent-containing solution, or the polymerization catalyst-containing solution. This embodiment can prevent the polymerization controlling agent to be modified due to contact with the cationic polymerization catalyst by adding the polymerization controlling agent to the second solution in advance.

The reaction temperature of the copolymerization is preferably from 50 to 150°C and more preferably from 60 to 120°C.

The reaction time of the copolymerization is preferably from 0.1 to 60 minutes and more preferably from 1 to 30 minutes.

The clouding time after the start of the copolymerization reaction is preferably from 1 to 30 seconds, more preferably from 2 to 25 seconds, still more preferably from 3 to 20 seconds, and particularly preferably from 5 to 18 seconds. When the clouding time is 1 second or longer, the copolymerization reaction does not rapidly proceed simultaneously with the addition of the cationic polymerization catalyst. This is preferable because the uniformity of the polymerization reaction is increased. On the other hand, when the clouding time is 30 seconds or less, the efficiency of producing the oxymethylene copolymer is increased. This is preferable. Note that as used herein, the "clouding time" is measured by the procedure described in Examples.

After the copolymerization, it is preferable to deactivate the cationic polymerization catalyst and/or the cationic active species by adding a polymerization terminator to stop the copolymerization reaction.

Examples of the polymerization terminator include, but are not particularly limited to, triphenylphosphine; ammonia; an amine (e.g., diethylamine, triethylamine, tributylamine); an ethanolamine (e.g., triethanolamine, N-methyldiethanolamine, N,N-diethylhydroxylamine, N-isopropylhydroxylamine, N,N-bisoctadecylhydroxylamine, N,N-dibenzylhydroxylamine). These polymerization terminators may be used singly or two or more kinds thereof may be used in combination.

The amount of polymerization terminator added is not particularly limited as long as the amount is sufficient to deactivate the cationic polymerization catalyst. The molar ratio based on the amount of cationic polymerization catalyst added (amount of polymerization terminator added/amount of cationic polymerization catalyst added) is usually in the range of $1.0 \times 10^{-1}$ to $1.0 \times 10^{1}$.

The polymer content involving the yield of the copolymerization reaction is preferably 80% or larger, more preferably 85% or larger, still more preferably 90% or larger, and particularly preferably 95% or larger. Note that the upper limit of the polymer content is 100%. Also, as used herein, the "polymer content" is measured by the procedure described in Examples.

[Terminal stabilization]

In one embodiment, the terminal of the oxymethylene copolymer may be stabilized after copolymerization. The oxymethylene copolymer obtained by copolymerization may have an unstable moiety ($-(CH_2O)_n-H$) at the terminal. The terminal may be stabilized to depolymerize the unstable moiety and convert the moiety into a stable terminal ($-CH_2CH_2OH$).

The terminal stabilization process is not particularly limited, but is preferably a process in which the oxymethylene copolymer is melted and heated. The terminal is stabilized usually by melt-kneading with an extruder. At this time, the terminal is preferably stabilized in the presence of at least one selected from the group consisting of terminal stabilizers, inorganic particles, antioxidants, and scavengers.

(Terminal stabilizer)

The terminal stabilizer has a function of improving the rate of decomposing the unstable moiety in the oxymethylene copolymer.

Examples of the terminal stabilizer include, but are not particularly limited to, ammonia; an amine (e.g., trimethylamine, triethylamine, tributylamine); a hydroxide salt of quaternary ammonium (e.g., tetramethylammonium, tetraethylammonium, ethyltrimethylammonium, trimethyl(2-hydroxyethyl)ammonium, tri ethyl (2-hydroxyethyl)ammonium, tripropyl(2-hydroxyethyl)ammonium, benzyltrimethylammonium, benzyltriethylammonium, benzyltripropylammonium); or a hydroacid salt (e.g., hydrochloride, hydrobromide), an oxoacid salt (e.g., sulfate, nitrate, carbonate), or a carboxylic acid salt (e.g., formate, acetate, propionate, benzoate, oxalate). These terminal stabilizers may be used singly or two or more kinds thereof may be used in combination.

Among them, the terminal stabilizer preferably contains a hydroxide salt of quaternary ammonium. It is more preferable to include at least one hydroxide salt of tetramethylammonium, tetraethylammonium, ethyltrimethylammonium, trimethyl(2-hydroxyethyl)ammonium, triethyl(2-hydroxyethyl)ammonium, tripropyl(2-hydroxyethyl)ammonium, benzyltrimethylammonium, benzyltriethylammonium, or benzyltripropylammonium.

The amount of terminal stabilizer added per 100 parts by mass of the oxymethylene copolymer is preferably from 0.01 to 10 parts by mass and more preferably from 0.05 to 5 parts by mass.

(Inorganic particles)

The inorganic particles have, for instance, a function of improving the thermal stability of the oxymethylene copolymer to be obtained.

Examples of the inorganic particles include, but are not particularly limited to, talc, mica, wollastonite, silica, layered double hydroxide, calcium carbonate, magnesium hydroxide, or calcium hydroxide. These inorganic particles may be used singly or two or more kinds thereof may be used in combination.

Among them, the inorganic particles preferably contain at least one selected from the group consisting of talc, mica, and layered double hydroxide, and more preferably contain layered double hydroxide.

The amount of inorganic particles added per 100 parts by mass of the oxymethylene copolymer is preferably from 0.0001 to 1 parts by mass, more preferably from 0.005 to 0.5 parts by mass, and still more preferably from 0.01 to 0.2 parts by mass.

(Antioxidant)

The antioxidant has a function of preventing the resulting oxymethylene copolymer from being oxidized.

The antioxidant is not particularly limited, and examples thereof include hindered phenol. Examples of the hindered phenol include n-octadecyl-3-(3',5'-di-t-butyl-4'-hydroxyphenyl)propionate, n-octadecyl-3-(3'-methyl-5'-t-butyl-4'-hydroxyphenyl)propionate, n-tetradecyl-3-(3',5'-di-t-butyl-4'-hydroxyphenyl)propionate, 1,6-hexanediol-bis[3-(3,5-di-t-butyl-4 hydroxyphenyl)propionate], 1,4-butanediol-bis[3-(3,5-di-t-butyl-4 hydroxyphenyl)propionate], triethylene glycol-bis[3-(3-t-butyl-5-methyl-4 hydroxyphenyl)propionate], tetrakis[methylene-3-(3'-t-butyl-4-hydroxyphenyl)propionate]methane, or N,N'-bis[3-(3,5-di-t-butyl-4 hydroxyphenyl)propionyl]hydrazine. These antioxidants may be used singly or two or more kinds thereof may be used in combination.

Among them, the antioxidant preferably contains triethylene glycol-bis[3-(3-t-butyl-5-methyl-4 hydroxyphenyl)propionate].

The amount of antioxidant added per 100 parts by mass of the oxymethylene copolymer is preferably from 0.0001 to 1 parts by mass, more preferably from 0.001 to 5 parts by mass, and still more preferably from 0.003 to 3 parts by mass.

(Scavenger)

The scavenger has a function of scavenging formic acid and/or formaldehyde generated, for example, by decomposing at least part of the oxymethylene copolymer.

Examples of the scavenger include, but are not particularly limited to, polyamide resin (e.g., nylon 6, nylon 11, nylon 12, nylon 66, nylon 610, nylon 6T, nylon 612); an amide compound (e.g., stearyl stearic acid amide, stearyl oleic acid amide, stearyl erucic acid amide, ethylenediamine-distearic acid amide, ethylenediamine-dibehenic acid amide); a urea compound (e.g., urea, N-phenylurea, N,N'-diphenylurea, N-phenylthiourea, N,N'-diphenylthiourea); or a triazine compound (e.g., melamine, benzoguanamine, N-phenylmelamine, melem, N,N'-diphenylmelamine, N-methylolmelamine, N,N'-trimethylolmelamine, 2,4-diamino-6-cyclohexyltriazine). These scavengers may be used singly or two or more kinds thereof may be used in combination.

Among them, the scavenger preferably contains a urea compound and/or a triazine compound, more preferably contains a triazine compound, and still more preferably contains melamine.

The amount of scavenger added per 100 parts by mass of the oxymethylene copolymer is preferably from 0.0001 to 10 parts by mass, more preferably from 0.001 to 5 parts by mass, and still more preferably from 0.003 to 3 parts by mass.

(Conditions for terminal stabilization)

The terminal stabilization temperature is not particularly limited, but is preferably 260°C or lower and more preferably 240°C or lower. The lower limit of the terminal stabilization temperature is not particularly limited as long as the temperature is equal to or higher than the melting point of the oxymethylene copolymer, and is preferably 150°C or higher, more preferably 180°C or higher, and still more preferably 200°C or higher. In one embodiment, the terminal stabilization temperature is preferably from 150 to 260°C, more preferably from 180 to 260°C, and still more preferably from 200 to 240°C.

The terminal stabilization time is not particularly limited, but is preferably from 1 minute to 3 hours, more preferably from 2 minutes to 1 hour, and still more preferably from 3 minutes to 30 minutes.

The terminal may be stabilized under reduced pressure. At this time, the pressure for terminal stabilization is not particularly limited, but is preferably from 10 to 100 KPa, more preferably from 10 to 80 KPa, and still more preferably from 10 to 50 KPa.

[Oxymethylene copolymer]

The oxymethylene copolymer may be obtained by a uniform polymerization reaction and has increased physical properties such as crystallinity.

The melting point of the oxymethylene copolymer is preferably 155°C or higher, more preferably 165°C or higher, still more preferably 168°C or higher, particularly preferably 170°C or higher, and most preferably 171°C or higher. Note that the upper limit of the melting point of the oxymethylene copolymer is not particularly limited, but is usually 250°C or lower, preferably 200°C or lower, and more preferably 180°C or lower. Also, as used herein, the "melting point" is measured by the procedure described in Examples.

Note that the oxymethylene copolymer may contain an additive(s). That is, the oxymethylene copolymer may be a composition. Thus, an aspect of the present invention provides a composition containing an oxymethylene copolymer and an additive(s).

Examples of the additive include, but are not particularly limited to, a stabilizer, inorganic particles, an antioxidant, a scavenger, a colorant, a plasticizer, a mold release agent, an optical brightener, an antistatic agent.

The additive may be added in the production step (e.g., the stabilization step), or may be added later to the produced oxymethylene copolymer.

<Method for producing molded article>

An aspect of the present invention provides a method for producing a molded article. This molded article-producing method includes molding an oxymethylene copolymer produced by the above-described method.

The oxymethylene copolymer produced by the above-described method may have uniformly distributed amorphous and crystalline portions, and thus has increased physical properties such as thermal stability. As a result, a molded article molded using the oxymethylene copolymer also has increased physical properties, and thus can be suitably used for high-performance and highly functional fibers, films, gears, and bearings.

Examples

Hereinafter, the present invention will be specifically described with reference to Examples. The present invention, however, is not limited thereto.

[Example 1]

A first solution was prepared which contained a boron trifluoride diethyl ether complex ($BF_3 \cdot Et_2O$) as a cationic polymerization catalyst and tetrahydrofuran (THF) as a polymerization controlling agent.

Next, 1000 g of trioxane (purity: 99.96%; manufactured by MITSUBISHI GAS CHEMICAL COMPANY, INC.), 5 g of 1,3-dioxolane (purity: 99.99%; manufactured by TOHO Chemical Industry Co., Ltd.) (0.5 parts by mass based on 100 parts by mass of trioxane) as a comonomer, and 0.35 g of methylal (manufactured by Kuraray Co., Ltd.) as a chain transfer agent were injected into a 5-L polymerization reactor equipped with a stirrer and maintained at 65°C under a nitrogen atmosphere to prepare a second solution.

The first solution was added to the second solution, and a polymerization reaction was performed at 65°C for 15 minutes to produce an oxymethylene copolymer.

Note that the amount of $BF_3 \cdot Et_2O$ used was 0.045 mmol based on 1 mol of trioxane. In addition, the amount of THF used was 700 $\mu$g based on 1 g of trioxane.

[Example 2]

An oxymethylene copolymer was produced in the same manner as in Example 1 except that the amount of THF used was changed to 230 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 3]

An oxymethylene copolymer was produced in the same manner as in Example 1 except that the amount of THF used was changed to 70 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 4]

An oxymethylene copolymer was produced in the same manner as in Example 1 except that the amount of $BF_3 \cdot Et_2O$ used was changed to 0.03 mmol based on 1 mol of trioxane and the amount of THF used was changed to 47 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 5]

An oxymethylene copolymer was produced in the same manner as in Example 1 except that the amount of THF used was changed to 35 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 6]

An oxymethylene copolymer was produced in the same manner as in Example 1 except that the amount of BF$_3$·Et$_2$O used was changed to 0.03 mmol based on 1 mol of trioxane and the amount of THF used was changed to 25 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 7]

An oxymethylene copolymer was produced in the same manner as in Example 1 except that the amount of THF used was changed to 7 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 8]

An oxymethylene copolymer was produced in the same manner as in Example 1 except that the amount of 1,3-dioxolane used was changed to 13 g (1.3 parts by mass based on 100 parts by mass of trioxane) and the amount of THF used was changed to 70 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 9]

An oxymethylene copolymer was produced in the same manner as in Example 8 except that the amount of BF$_3$·Et$_2$O used was changed to 0.03 mmol based on 1 mol of trioxane and the amount of THF used was changed to 25 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 10]

An oxymethylene copolymer was produced in the same manner as in Example 8 except that the amount of THF used was changed to 7 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 11]

An oxymethylene copolymer was produced in the same manner as in Example 1 except that the amount of 1,3-dioxolane used was changed to 40 g (4.0 parts by mass based on 100 parts by mass of trioxane) and the amount of THF used was changed to 70 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 12]

An oxymethylene copolymer was produced in the same manner as in Example 1 except that the amount of 1,3-dioxolane used was changed to 60 g (6.0 parts by mass based on 100 parts by mass of trioxane) and the amount of THF used was changed to 70 $\mu$g based on 1 g of the amount of trioxane used. Note that the amount of THF used was adjusted by reducing the amount of THF added to the first solution so as to be the above-described amount and adding benzene in an amount corresponding to the reduced amount.

[Example 13]

A polymerization catalyst-containing solution was prepared which contained a boron trifluoride diethyl ether complex (BF$_3$·Et$_2$O) as a cationic polymerization catalyst and benzene.

In addition, a polymerization controlling agent-containing solution was prepared which contained tetrahydrofuran (THF) as a polymerization controlling agent and benzene.

Next, 1000 g of trioxane (purity: 99.96%; manufactured by MITSUBISHI GAS CHEMICAL COMPANY, INC.), 5 g of 1,3-dioxolane (purity: 99.99%; manufactured by TOHO Chemical Industry Co., Ltd.) (0.5 parts by mass based on 100 parts by mass of trioxane) as a comonomer, and 0.35 g of methylal (manufactured by Kuraray Co., Ltd.) as a chain transfer agent were injected into a 5-L polymerization reactor equipped with a stirrer and maintained at 65°C under a nitrogen atmosphere to prepare a second solution.

The polymerization controlling agent-containing solution was added to the second solution, and the mixture was stirred for 1 minute. Next, the polymerization catalyst-containing solution was added to the resulting mixture, and a polymerization reaction was performed at 65°C for 15 minutes to produce an oxymethylene copolymer.

Note that the amount of BF$_3$·Et$_2$O used was 0.045 mmol based on 1 mol of trioxane. In addition, the amount of THF used was 100 μg based on 1 g of the amount of trioxane used.

[Example 14]

An oxymethylene copolymer was produced in the same manner as in Example 3 except that 4-methyltetrahydropyran (MTHP) was used instead of THF.

[Example 15]

An oxymethylene copolymer was produced in the same manner as in Example 3 except that 2-methyltetrahydrofuran (MHF) was used instead of THF.

[Example 16]

An oxymethylene copolymer was produced in the same manner as in Example 8 except that BF$_3$·Et$_2$O and triphenylborane (TPB) were used as the cationic polymerization catalyst and the amount of THF used was changed to 65 μg based on 1 g of the amount of trioxane used. Note that the amount of BF$_3$·Et$_2$O used was 0.03 mmol based on 1 mol of trioxane, and the amount of TPB used was 0.0003 mmol based on 1 mol of trioxane. Here, the amount of THF used was adjusted by reducing the amount of THF added to the first solution so as to be the above-described amount and adding benzene in an amount corresponding to the reduced amount.

[Example 17]

An oxymethylene copolymer was produced in the same manner as in Example 8 except that instead of BF$_3$·Et$_2$O, perchloric acid (HClO$_4$) was used in an amount of 0.0003 mmol based on 1 mol of trioxane and the amount of THF used was changed to 65 μg based on 1 g of the amount of trioxane used. Note that the amount of THF used was adjusted by reducing the amount of THF added to the first solution so as to be the above-described amount and adding benzene in an amount corresponding to the reduced amount.

[Comparative Example 1]

An oxymethylene copolymer was produced in the same manner as in Example 1 except that THF was not added.

[Comparative Example 2]

An oxymethylene copolymer was produced in the same manner as in Example 4 except that THF was not added.

[Comparative Example 3]

An oxymethylene copolymer was produced in the same manner as in Example 8 except that THF was not added.

[Comparative Example 4]

An oxymethylene copolymer was produced in the same manner as in Example 4 except that instead of THF, 1,4-dioxane (DOX) was used in an amount of 50 μg based on 1 g of the amount of trioxane used.

[Comparative Example 5]

An oxymethylene copolymer was produced in the same manner as in Example 16 except that THF was not added.

[Comparative Example 6]

An oxymethylene copolymer was produced in the same manner as in Example 17 except that THF was not added.

Examples 1 to 17 and Comparative Examples 1 to 6 are listed in Table 1 below.

[Table 1]

| | Dioxolane | Cationic polymerization catalyst | | Polymerization controlling agent | | |
|---|---|---|---|---|---|---|
| | Amount used (parts by mass*1) | Kind | Amount used (mmol*2) | Kind | Amount used (μg*3) | Addition method*4 |
| Example 1 | 0.5 | $BF_3·Et_2O$ | 0.045 | THF | 700 | A |
| Example 2 | 0.5 | $BF_3·Et_2O$ | 0.045 | THF | 230 | A |
| Example 3 | 0.5 | $BF_3·Et_2O$ | 0.045 | THF | 70 | A |
| Example 4 | 0.5 | $BF_3·Et_2O$ | 0.03 | THF | 47 | A |
| Example 5 | 0.5 | $BF_3·Et_2O$ | 0.045 | THF | 35 | A |
| Example 6 | 0.5 | $BF_3·Et_2O$ | 0.03 | THF | 25 | A |
| Example 7 | 0.5 | $BF_3·Et_2O$ | 0.045 | THF | 7 | A |
| Example 8 | 1.3 | $BF_3·Et_2O$ | 0.045 | THF | 70 | A |
| Example 9 | 1.3 | $BF_3·Et_2O$ | 0.03 | THF | 25 | A |
| Example 10 | 1.3 | $BF_3·Et_2O$ | 0.045 | THF | 7 | A |
| Example 11 | 4.0 | $BF_3·Et_2O$ | 0.045 | THF | 70 | A |
| Example 12 | 6.0 | $BF_3·Et_2O$ | 0.045 | THF | 70 | A |
| Example 13 | 0.5 | $BF_3·Et_2O$ | 0.045 | THF | 100 | B |
| Example 14 | 0.5 | $BF_3·Et_2O$ | 0.045 | MTHP | 70 | A |
| Example 15 | 0.5 | $BF_3·Et_2O$ | 0.045 | MHF | 70 | A |
| Example 16 | 1.3 | $BF_3·Et_2O$ / TPB | 0.03 / 0.0003 | THF | 156 | A |
| Example 17 | 1.3 | $HClO_4$ | 0.0003 | THF | 65 | A |
| Comparative Example 1 | 0.5 | $BF_3·Et_2O$ | 0.045 | - | 0 | A |
| Comparative Example 2 | 0.5 | $BF_3·Et_2O$ | 0.03 | - | 0 | A |
| Comparative Example 3 | 1.3 | $BF_3·Et_2O$ | 0.045 | - | 0 | A |

(continued)

| | Dioxolane | Cationic polymerization catalyst | | Polymerization controlling agent | | |
|---|---|---|---|---|---|---|
| | Amount used (parts by mass*1) | Kind | Amount used (mmol*2) | Kind | Amount used ($\mu$g*3) | Addition method*4 |
| Comparative Example 4 | 0.5 | $BF_3 \cdot Et_2O$ | 0.03 | DOX | 50 | A |
| Comparative Example 5 | 1.3 | BF3·Et₂O | 0.03 | - | 0 | A |
| | | TPB | 0.0003 | | | |
| Comparative Example 6 | 1.3 | $HClO_4$ | 0.0003 | - | 0 | A |

*1 The amount used per 100 parts by mass of trioxane.
*2 The amount used per mol of trioxane.
*3 The amount used per g of trioxane.
*4 In method A, a first solution containing a cationic polymerization catalyst and a polymerization controlling agent was added to a second solution. In method B, a polymerization catalyst-containing solution and a polymerization controlling agent-containing solution were each added to the second solution.

[Evaluation]

The polymerization uniformity, polymer content, clouding time, and melting point were evaluated for Examples 1 to 17 and Comparative Examples 1 to 6.

[Polymerization uniformity]

The produced oxymethylene copolymer was visually inspected and evaluated according to the following criteria. The obtained results are shown in Table 2 below.
∘: Agglomerated material occurred in the oxymethylene copolymer at one time in the entire reaction solution.
△: Agglomerated material occurred locally in the oxymethylene copolymer, and the whole material was agglomerated within 2 seconds.
✕: Agglomerated material occurred locally in the oxymethylene copolymer, and the whole material was agglomerated after 2 seconds or longer.

[Polymer content]

An agglomerated oxymethylene copolymer was separated from the reaction solution after the polymerization reaction to obtain a composition containing the oxymethylene copolymer.
Next, the composition containing the oxymethylene copolymer was washed twice with acetone, and vacuum-dried at 60°C for 2 hours by using a vacuum dryer. This removed acetone and the remaining unreacted monomer.
The mass of the composition before removal of the unreacted monomer and the mass of the composition after removal of the unreacted monomer were used to calculate the polymer content (%) by the following formula. The obtained results are shown in Table 2 below.

$$\text{Polymer content (\%)} = \frac{\text{Mass of composition after removal of unreacted monomer}}{\text{Mass of composition before removal of unreacted monomer}} \times 100$$

[Clouding time]

The time from injection of the cationic polymerization catalyst to clouding of the reaction solution by the polymerization reaction was measured. The obtained results are shown in Table 2 below.

[Melting point]

The cationic polymerizable catalyst in the produced oxymethylene copolymer was deactivated and the terminal was stabilized, and the melting point was then measured.

The cationic polymerizable catalyst deactivation and the terminal stabilization were performed as follows. Specifically, an agglomerated oxymethylene copolymer was separated from the reaction solution after the polymerization reaction to obtain a composition containing the oxymethylene copolymer. The composition was wet-pulverized in 2% triethylamine solution (water : methanol = 1 : 4 (mass ratio)), washed twice with acetone, and vacuum-dried at 60°C for 2 hours by using a vacuum dryer. Here, 100 parts by mass of the dried composition was admixed with 0.3 parts by weight of triethylene glycol-bis[3-(3-t-butyl-5-methyl-4 hydroxyphenyl)propionate] (Irganox (registered trademark) 245; manufactured by BASF Japan Ltd.) and 0.05 parts by weight of melamine (manufactured by Mitsui Chemicals, Inc.). The mixture was melt-kneaded at 220°C for 20 minutes while using a heating and kneading machine (LaboPlastomill 4C150, manufactured by Toyo Seiki Seisaku-sho, Ltd.).

The terminal-stabilized oxymethylene copolymer was freeze-pulverized, and the melting point was measured using a differential calorimeter (DSC 8500, manufactured by PerkinElmer, Inc.). Specifically, the melting point was measured by the following procedure. Specifically, the oxymethylene copolymer was heated to 210°C and melted, cooled to 30°C, and heated again at 20°C/min, and then measured for the peak top of the exothermic peak occurring in the process. The obtained results are shown in Table 2 below.

[Table 2]

| | Polymerization uniformity | Polymer content (%) | Clouding time (seconds) | Melting point (°C) |
|---|---|---|---|---|
| Example 1 | ○ | 87 | 24 | 167.4 |
| Example 2 | ○ | 96 | 10 | 170.2 |
| Example 3 | ○ | 98 | 4 | 171.8 |
| Example 4 | ○ | 96 | 7 | 169.6 |
| Example 5 | ○ | 98 | 2 | 171.5 |
| Example 6 | ○ | 96 | 2 | 171.5 |
| Example 7 | Δ | 89 | 1 | 169.9 |
| Example 8 | ○ | 96 | 3 | 168.9 |
| Example 9 | ○ | 96 | 3 | 168.9 |
| Example 10 | Δ | 96 | 1 | 168.7 |
| Example 11 | ○ | 98 | 15 | 164.9 |
| Example 12 | ○ | 98 | 20 | 161.0 |
| Example 13 | ○ | 97 | 5 | 170.5 |
| Example 14 | ○ | 99 | 2 | 172.0 |
| Example 15 | ○ | 98 | 4 | 169.8 |
| Example 16 | ○ | 98 | 8 | 169.1 |
| Example 17 | ○ | 97 | 4 | 168.9 |
| Comparative Example 1 | × | 86 | <1 | 168.7 |
| Comparative Example 2 | × | 81 | <1 | 168.5 |
| Comparative Example 3 | × | 96 | <1 | 168.5 |
| Comparative Example 4 | × | 84 | <1 | 168.7 |

(continued)

|  | Polymerization uniformity | Polymer content (%) | Clouding time (seconds) | Melting point (°C) |
|---|---|---|---|---|
| Comparative Example 5 | × | 92 | <1 | 167.3 |
| Comparative Example 6 | × | Poor polymerization | <1 | - |

The results in Table 2 have revealed that Examples 1 to 17 have higher polymerization uniformity than Comparative Examples 1 to 6. The results have demonstrated that the present oxymethylene copolymers exhibit increased physical properties.

In addition, Examples 1 to 17 are found to have a high polymer content, so that the polymerization reaction proceeds suitably.

Further, Examples 1 to 17 have a long clouding time (1 second or longer). Thus, it is considered that agglomeration does not occur before the cationic polymerization catalyst is uniformly dispersed in the reaction solution. Note that the clouding time of preferably 25 seconds or less, more preferably 22 seconds or less, still more preferably 12 seconds or less, particularly preferably 9 seconds or less, and most preferably 5 seconds or less is preferable because of increased productivity.

In addition, the high melting point of each of Examples 1 to 17 indicates that each oxymethylene copolymer has increased crystallinity and strength.

## Claims

1. A method for producing an oxymethylene copolymer, comprising copolymerizing trioxane and a comonomer copolymerizable with the trioxane in a presence of a cationic polymerization catalyst and a polymerization controlling agent, wherein the polymerization controlling agent is a cyclic ether with a 4- or more-membered ring containing one oxygen atom.

2. The method according to claim 1, wherein an amount of the polymerization controlling agent added is 250 $\mu$g or less based on 1 g of trioxane.

3. The method according to claim 1 or 2, wherein an amount of the polymerization controlling agent added is 7.1 $\mu$g or larger based on 1 g of trioxane.

4. The method according to any one of claims 1 to 3, wherein the cyclic ether contains at least one of a cyclic ether with a 5-membered ring containing one oxygen atom and a cyclic ether with a 6-membered ring containing one oxygen atom.

5. The method according to any one of claims 1 to 4, wherein the cyclic ether comprises at least one selected from the group consisting of tetrahydrofuran (THF), 4-methyltetrahydropyran (MTHP), and 2-methyltetrahydrofuran (MHF).

6. The method according to any one of claims 1 to 5, comprising adding a first solution containing the polymerization controlling agent and the cationic polymerization catalyst to a second solution containing the trioxane and the comonomer copolymerizable with the trioxane.

7. The method according to any one of claims 1 to 6, wherein the cationic polymerization catalyst is a Lewis acid and/or a protonic acid.

8. The method according to any one of claims 1 to 7, wherein the cationic polymerization catalyst comprises at least one selected from the group consisting of boron trifluoride and coordination compounds thereof, aryl boron fluoride compounds and coordination compounds thereof, and perchloric acid and derivatives thereof.

9. The method according to any one of claims 1 to 8, wherein an amount of the comonomer added is from 0.1 to 6.5 parts by mass based on 100 parts by mass of the trioxane.

10. A method for producing a molded article, comprising molding an oxymethylene copolymer produced by the method according to any one of claims 1 to 9.

<div align="center">**INTERNATIONAL SEARCH REPORT**</div>

| | International application No. |
|---|---|
| | **PCT/JP2022/031004** |

| A. | CLASSIFICATION OF SUBJECT MATTER |
|---|---|
| | *C08G 2/18*(2006.01)i; *C08F 4/00*(2006.01)i; *C08F 4/14*(2006.01)i <br> FI: C08G2/18; C08F4/14; C08F4/00 |
| | According to International Patent Classification (IPC) or to both national classification and IPC |

| B. | FIELDS SEARCHED |
|---|---|
| Minimum documentation searched (classification system followed by classification symbols) <br> C08G2/00-2/38; C08G61/00-61/12; C08F4/00-4/82 | |
| Documentation searched other than minimum documentation to the extent that such documents are included in the fields searched <br> Published examined utility model applications of Japan 1922-1996 <br> Published unexamined utility model applications of Japan 1971-2022 <br> Registered utility model specifications of Japan 1996-2022 <br> Published registered utility model applications of Japan 1994-2022 | |
| Electronic data base consulted during the international search (name of data base and, where practicable, search terms used) | |

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020/250945 A1 (MITSUBISHI GAS CHEMICAL COMPANY, INC.) 17 December 2020 (2020-12-17) <br> claims, paragraphs [0020], [0076]-[0077], examples | 1, 4-10 |
| A | | 2-3 |
| X | JP 2005-527664 A (BASF AG) 15 September 2005 (2005-09-15) <br> claims, paragraphs [0053]-[0054], [0064], [0085], [0097] | 1, 4-7, 9-10 |
| A | | 2-3, 8 |
| A | WO 2008/018414 A1 (MITSUBISHI GAS CHEMICAL COMPANY, INC.) 14 February 2008 (2008-02-14) <br> claims | 1-10 |
| A | JP 61-275320 A (MITSUBISHI GAS CHEMICAL COMPANY, INC.) 05 December 1986 (1986-12-05) <br> claims | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 September 2022** | **11 October 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/031004**

| Patent document cited in search report | | | Publication date (day/month/year) | Patent family member(s) | | | Publication date (day/month/year) |
|---|---|---|---|---|---|---|---|
| WO | 2020/250945 | A1 | 17 December 2020 | US claims, paragraphs [0022], [0083]-[0084], examples | 2022/0056259 | A1 | |
| | | | | EP | 3862374 | A1 | |
| | | | | KR | 10-2021-0072100 | A | |
| | | | | CN | 113166345 | A | |
| | | | | TW | 202106738 | A | |
| JP | 2005-527664 | A | 15 September 2005 | US claims, paragraphs [0069]-[0070], [0079], [0115], [0136]-[0137] | 2005/0176924 | A1 | |
| | | | | WO | 2003/085018 | A1 | |
| | | | | CN | 1653105 | A | |
| | | | | KR | 10-2004-0099412 | A | |
| WO | 2008/018414 | A1 | 14 February 2008 | EP claims | 2050774 | A1 | |
| | | | | CN | 101501091 | A | |
| | | | | KR | 10-2009-0050049 | A | |
| JP | 61-275320 | A | 05 December 1986 | US claims | 4681927 | A | |
| | | | | DE | 3617754 | A1 | |

Form PCT/ISA/210 (patent family annex) (January 2015)

**EP 4 393 972 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018154797 A